# EUROPEAN PATENT SPECIFICATION

(11) **EP 1 634 249 B1**
(45) Date of publication and mention of the grant of the patent: **16.03.2011**
(21) Application number: 03817159.1
(22) Date of filing: 30.05.2003
(51) Int. Cl.: G06T 15/60

(54) **RENDERING OF SOFT SHADOWS USING DEPTH MAPS**
WIEDERGABE WEICHER SCHATTEN DURCH TIEFENKARTEN
RENDU D'OMBRES DOUCES UTILISANT DES CARTES DE PROFONDEUR

(43) Date of publication of application: 15.03.2006
(60) Divisional application: 11000820.8
(73) Proprietor: Pacific Data Images LLC, Glendale, CA 91201 (US)
(72) Inventor: SCHMIDT, Karl, Johann, San Francisco, CA 94133 (US)
(74) Representative: Goddar, Heinz J.
(86) International application number: PCT/US2003/016956
(87) International publication number: WO 2004/109601

(56) References cited:
- US-A- 5 299 298
- US-A- 5 742 749
- US-B1- 6 252 608
- BRABEC S ET AL: "SINGLE SAMPLE SOFT SHADOWS USING DEPTH MAPS" PROCEEDINGS GRAPHICS INTERFACE 2002. CALGARY, ALBERTA, CANADA, MAY 27 20020527 TORONTO : CIPS, US, vol. CONF. 28, 27 May 2002 (2002-05-27), pages 219-228, XP001232475 ISBN: 978-1-56881-183-3
- AGRAWALA M ET AL: "EFFICIENT IMAGE-BASED METHODS FOR RENDERING SOFT SHADOWS" 23 July 2000 (2000-07-23), COMPUTER GRAPHICS. SIGGRAPH 2000 CONFERENCE PROCEEDINGS. NEW ORLEANS, LA, JULY 23 - 28, 2000; [COMPUTER GRAPHICS PROCEEDINGS. SIGGRAPH], NEW YORK, NY : ACM, US, PAGE(S) 375 - 384 , XP001003577 ISBN: 978-1-58113-208-3 * sections 1, 3, 5, 5.2 *

## Description

### BACKGROUND

### Field of the Invention

This invention relates to rendering techniques in computer graphics, and in particular to rendering soft shadows for area light sources using depth maps.

### Background of the Invention

Computing proper and realistic lighting is an important aspect of rendering three-dimensional, computer-generated images. In an image, which can be a single frame in an animated work, one or more light sources illuminate the surfaces of various objects in the scene. These light sources have particular locations, lighting powers, and other properties that determine how they illuminate these surfaces. This illumination affects the appearance of the objects in the image, as seen from a point of reference of a camera position, that is, the point of view from which the image is taken. To produce realistic images, a rendering program, or renderer, determines the extent to which objects in the image occlude the light from illuminating on other objects according to an underlying three-dimensional model of the objects and the light sources. In this way, the renderer simulates in the image shadows cast on the objects.

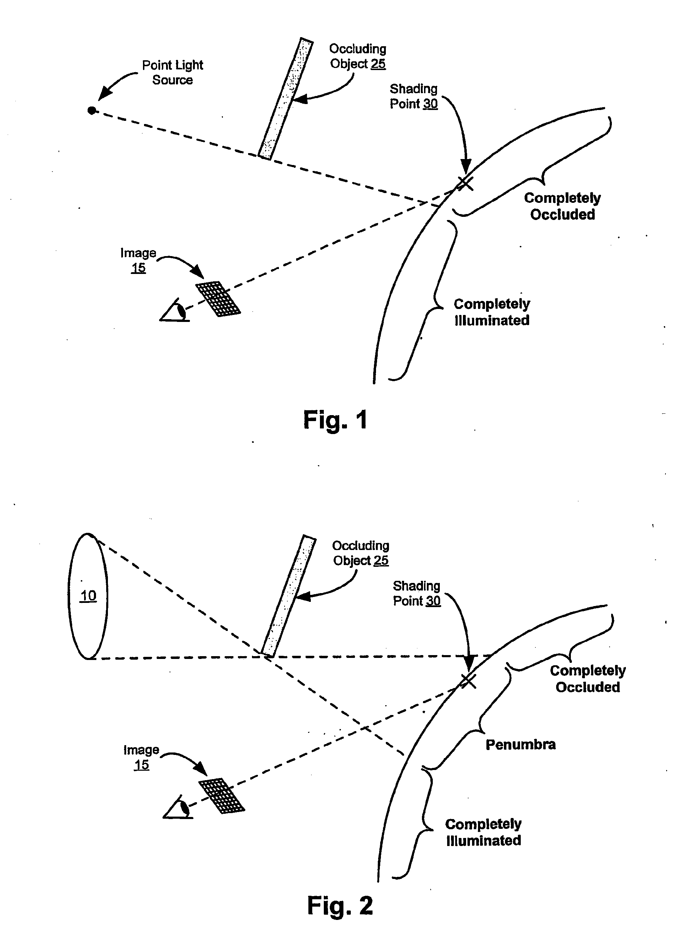

In the simplest model, a light source is modeled as a point in three-dimensional space. Whether the point light source illuminates a particular location on the surface of any particular object is determined according to whether another object blocks a straight path between the light source and the location on the surface. In this way, a location (a shading point) is either completely illuminated by the light source, or the light source is completely occluded. As one can appreciate, the discrete nature of this model causes light sources to cast distinct shadows, called hard shadows; in other words, any location is either in the light or in a hard shadow. Fig. 1 illustrates how a point light source casts a hard shadow.

To produce a more realistic image, renderers often model light sources as being distributed across an area, as shown in Fig. 2. In this way, a location on a surface can be completely illuminated, completely shadowed, or shadowed to varying degrees. This results in a soft shadow, and the area on the surface where the light is partially blocked is called a penumbra. The task for the renderer, therefore, is to determine the degree to which objects in the scene occlude each light source from illuminating locations in view.

One existing approach to determine soft shadows is to model an area light source as having a plurality of point sources distributed across it. To determine the degree of light occlusion at a particular shading point, the renderer determines for each modeled point light source whether the light from that point source is occluded or illuminates the shading point. The shading is then calculated as a ratio of the number of occluded light sources to the total number of light sources. This approach, however, can result in aliasing or other undesirable artifacts. Additionally, this approach can be computationally intensive, thus requiring an undesirably high amount of time and resources to render the image.

In the approach disclosed in patent publication US6252608 B1, a scene is rendered from the perspective of a light source in order to construct a shadow depth map, which is then applied to an image rendered from the perspective of the viewpoint and illuminated by the light source for computing a shadowed image. The system supports linear or higher order filtering of data from the shadow map to produce smoother transitions and attenuation from shadowed to un-shadowed portions of an image.

In the approach disclosed in patent publication US5742749 A1, a shadow coefficient is generated as a weighted sum of shadow factors, which represents the degree to which an object points is shadowed from the light source by other objects in the scene.

Summary of the Invention

The present invention is defined in accordance with the claims set forth below. The shading of a shading point is determined according to the amount of occlusion of a light source relative to the shading point. Determining the amount of occlusion of a light source at various shading points in a scene allows for the rendering of a soft shadow cast by an area light source onto a surface in the scene. For a given light source, a depth map having an array of pixels is computed. If a pixel in the depth map contains an occluding object from the perspective of the light source, the pixel is associated with a depth value, which is a distance along an axis normal to the depth map from the light source to the occluding object. Using a pixel's location in the depth map and its depth value for each of a plurality of pixels in the depth map, a renderer computes an amount of the area of the light source occluded by the objects represented in the depth map. Thereafter, the renderer computes a shadow factor that indicates the amount of occlusion of the light source at the shading point. This determined amount of shading can subsequently be used to compute the color properties of a pixel in a rendered image that corresponds to the shading point.

According to an embodiment of the invention, a computer-implemented method is provided for computing a shadow factor for a light source at a particular shading point. A depth map is computed wherein the depth map includes an array of pixels. At least some of the pixels in the depth map have a depth value, which indicates a distance along an axis normal to the depth map from the light source to a portion of an occluding object contained by the pixel. For a number of pixels in the depth map, an amount of the light source occluded by a portion of an object represented by the depth map pixel is computed. The
shadow factor is then determined using these computed amounts. In one embodiment, computing the shadow factor comprises totaling the amount of the light source occluded for each depth map pixel, if any, to obtain a total occluded area, and then determining the shadow factor as a ratio of the total occluded area to the area of the light source.

In another embodiment for computing the shadow factor, the non-occluded area of the light source is estimated based on the empty pixels (e.g., those that do not contain a portion of an occluding object). In this embodiment, the non-empty pixels that occlude the light source at the shading point are identified. The shadow factor is based on a weighted sum of the empty pixels, weighted according to (1) the distribution of the occluding pixels by their depth values, and (2) the distance of the empty pixel from a center pixel.

Brief Description of the Drawings

Fig. 1 shows a model of a point light source casting a hard shadow.

Fig. 2 shows a model of an area light source casting a soft shadow.

Fig. 3 is a flow diagram of a method for determining an amount of occlusion of an area light source at a particular shading point, in accordance with an embodiment of the invention,

Fig. 4 is an illustration of the embodiment shown in Fig. 3.

Fig. 5 is an example of a view of the light source and projected depth map pixels from the shading point, in accordance with the embodiment shown in Fig. 3.

Fig. 6 is flow diagram of a method for determining an amount of occlusion of an area light source at a particular shading point, in accordance with another embodiment of the invention.

Fig. 7 is an illustration of the embodiment shown in Fig. 6.

Fig. 8 is an example histogram of non-empty, occluding pixels based on their limit radius, in accordance with the embodiment shown in Fig. 6.

Fig. 9 is an example histogram of empty pixels based on their distance from the center pixel, in accordance with the embodiment shown in Fig. 6.

Fig. 10 is an example graph of estimated area from empty pixels based on their distance from the center pixel, in accordance with the embodiment shown in Fig. 6.

### DETAILED DESCRIPTION OF THE PREFERRED EMBODIMENTS

The present invention is now described more fully with reference to the accompanying figures, in which several embodiments of the invention are shown. The present invention may be embodied in many different forms and should not be construed as limited to the embodiments set forth herein. The descriptions, terminology, and figures are provided so as to explain the invention without undue complexity, but should not be taken as limiting the scope of the invention, which is set forth in the claims below.

Referring again to Fig. 2 for purposes of explanation, the invention provides a method for computing soft shadows cast from an area light source 10. An image 15 comprises array of pixels that represent a three-dimensional scene as viewed from a particular vantage point of a virtual camera. For a given pixel in the image 15, a renderer must determine the degree to which one or more light sources 10 in the scene illuminate surfaces 20 of objects that are viewable from a vantage point. To do this, the renderer must determine the degree to which other objects 25 in the scene occlude the light from the light source 10, thus casting shadows on the surface 20. Any particular point in the scene that is viewable from the vantage point corresponds to a pixel in the image 10. Accordingly, to determine the value of that pixel in the image 10, the renderer determines the extent to which the light source 10 is occluded at a corresponding position. This position is known as the shading point 30. The amount that a light source 10 is occluded at a shading point 30 can be expressed as a shadow factor for the shading point 30 and the light source 10.

A pixel in an image 15 represents a discrete area that corresponds to an infinite number of points in the three-dimensional scene. For various reasons, renderers use oversampling, wherein the renderer evaluates multiple points in a scene in order to compute the value of a single pixel. Accordingly, a renderer may use the method described herein to compute a number of shadow factors for different shading points for the purpose of determining the values of a single pixel of the image. In addition, a number of shadow factors may be computed for a single shading point., where each shadow factor corresponds to a different light source.

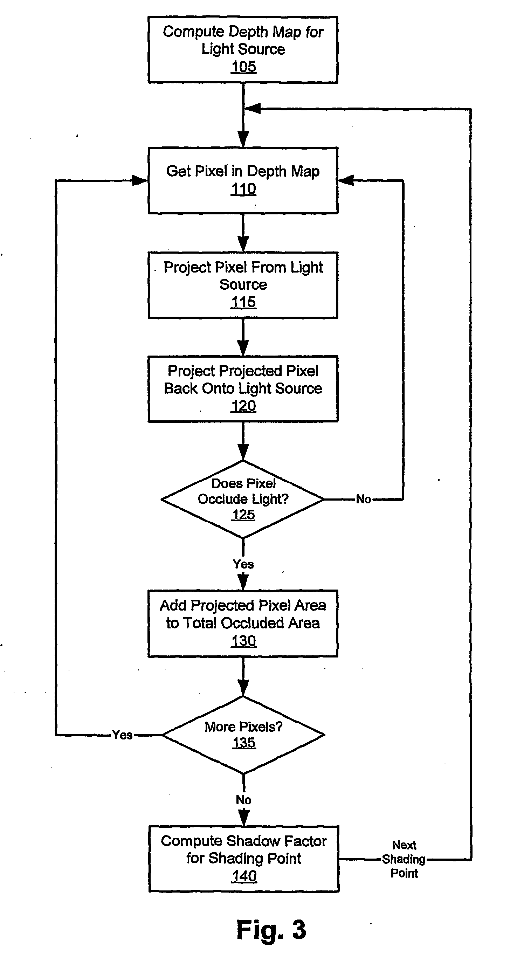

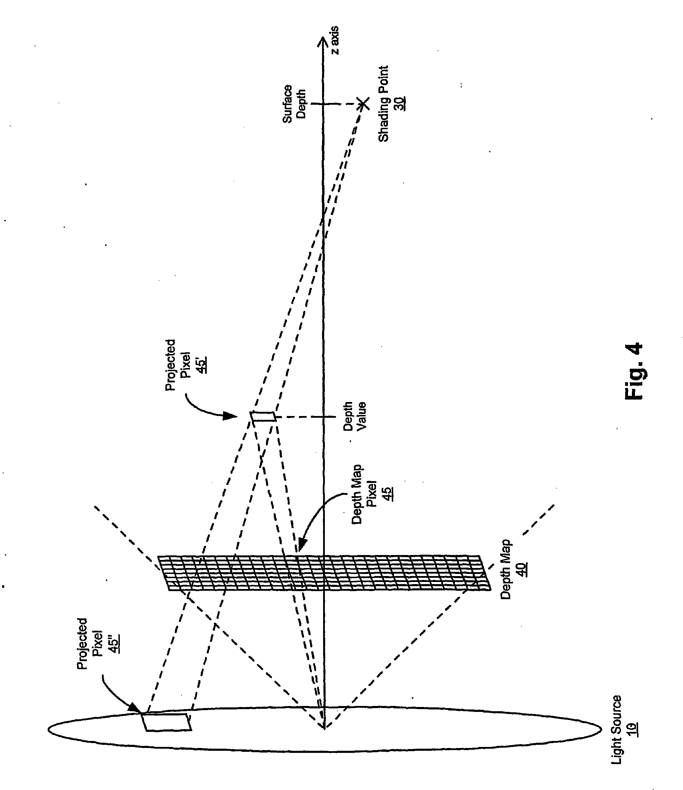

Fig. 3 shows a flow diagram of one embodiment for determining an extent to which an area light source 10 is occluded at a particular shading point 30, and Fig. 4 illustrates this method. For a given light source 10, a depth map 40 is computed 105. The depth map 40 includes an array of pixels 45, where instead of having a color value, each pixel 45 has a depth value. In one embodiment, the depth value is defined with reference to a z-axis, which is normal to the depth map. To determine the depth value of a pixel 45, the renderer determines whether that pixel 45 contains an occluding object. An object is contained by a pixel 45 if, looking at the depth map 40 from the light source 10, the object appears in the depth map 40 at the coordinates of that pixel 45 (i.e., a straight line could pass from the light source 10, through the pixel 45, and to the object). In other words, the object is in the direction of the pixel 45 according to that pixel's location in the depth map 40. The depth value of a pixel 45 is thus determined as the distance along the z-axis (i.e., the z-coordinate) from the light source 10 to the nearest object that the pixel 45 contains. This depth value is sometimes called a "z-depth," Since it is the projection of the distance from the light source 10 to the object in the z-axis.

Not every pixel 45 in the depth map 40 necessarily contains a depth value. For example, if there are no objects in the direction of a particular pixel 45 in the depth map 40, that pixel 45 would not have a corresponding value for the distance to the nearest object - since there is none. Such a pixel is thus termed "empty." Alternatively, a pixel 45 may also be set to "empty" if its z-depth is greater than the z-depth of the shading point. In such a case, the nearest object corresponding to that pixel 45 would be farther from the light source 10 that the shading point 30, so it could not occlude the light. By designating these pixels 45 empty, the empty pixels 45 can be skipped in the following steps in the method. This may save significant computational time and resources, since the number of pixels in a depth map can be large (e.g., over a million pixels for a depth map having a resolution of 1024 by 1024).

Advantageously, this computed depth map 40 can be used to determine the shadow factor for each shading point 30 in an image for a given light source. Therefore, once the depth map 40 is computed for a light source 10, the following steps can be performed for each shading point 30 in the image. Accordingly, shadow factors for additional shading points can be determined by repeating steps 110 through 140 using the different shading points but the same depth map 40 computed in step 105.

For a given shading point, the renderer gets 110 a pixel 45 from the depth map 40. If that pixel is "empty" (or otherwise excluded from being considered, e.g., due to undersampling), the renderer gets 110 another pixel 45. Otherwise, the renderer determines an amount of the light source 10 that is occluded by a portion of an occluding object represented by the depth map pixel 45. The pixel 45 is then projected 115 back into three-dimensional space according to its position in the depth map 40 and its depth value. As illustrated in Fig. 4, this creates a projected pixel 45' located somewhere between the light source 10 and the shading point 30 in terms of the z-axis. This projected pixel 45' is then further projected 120 from the shading point 30 back onto the area of the light source 10. If the projected pixel 45" covers the light source 10, it represents an object that occludes at least a portion of the light source 10 at the shading point 30.

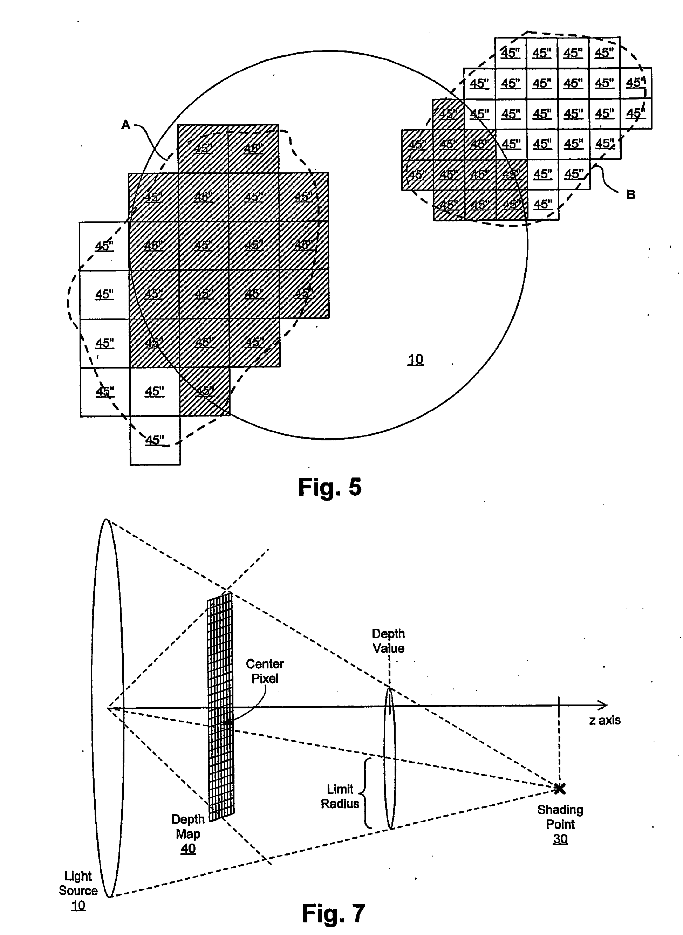

Fig. 5 illustrates a view of the light source 10 and several projected depth map pixels 45" as seen from the shading point 30. It should be noted that the projected pixels vary in size due to the varying distances from which their projection starts. As a result, the area of the light source that is occluded by a depth map pixel varies with the depth value of the pixel. The area of the projected pixel 45" increases as the depth value of the corresponding pixel 45 increases. This is logical, since a "deeper" depth map pixel represents an occluding object that is closer to the shading point 30, which tends to cause more occlusion of the light source 10 as seen by the shading point 30. For example, as shown in Fig. 5, dotted lines A and B illustrate the projections of different objects from the shading point back 30 onto the light source 10. Occluding object A is closer to the shading point 30 that occluding object B, based on the relative size of the projected pixels 45" that each object causes.

Having projected the depth map pixel 45 out based on its depth value and then back onto the light source 10, the renderer determines 125 whether the resulting projected pixel 45" occludes the light source 10. As shown in Fig. 5, some projected pixels 45" will lie completely within the area of the light source 10, some will lie completely outside that area, and some will lie partially within and partially outside it. Accordingly, whether a projected pixel 45" occludes the light source 10 may be defined in any of several ways. For example, a projected pixel 45" may be defined to occlude the light source 10 if its center is within the area of the light source 10. Alternatively, the projected pixel 45" may be defined to occlude the light source 10 if any of it lies within the light source 10, or only if all of it lies within the light source 10. In another alternative, a projected pixel 45" that lies partially within the light source 10 is apportioned a pro rata amount of occlusion (e.g., 75%) according to the fraction of the projected pixel 45" that lies within the light source 10. This alternative is computationally complex, and thus may be impractical in most applications. Sampling may also be used to determine whether the pixels lies within the area of the light source 10. Additionally, the error introduced by counting a projected pixel 45" that lies only partially in the light source 10 as "all in" or "all out" can be reduced by increasing the resolution of the depth map.

Once a projected pixel 45" is determined 125 to occlude the light source 10, its area is added 130 to a total for the area occluded. After that, or if a pixel is determined 125 to not occlude the light source 10, the renderer determines 135 if additional pixels are to be processed. If so, the renderer obtains 110 the next pixel to be processed, and repeats the operations described above. Otherwise, the renderer uses the calculated total area of the occluded pixels to calculate 140 a shadow factor for the shading point 30. In one embodiment, the shadow factor is the total occluded area of the light source 10 divided by the total area of the light source 10. This shadow factor can be expressed as a percentage or fraction that indicates the amount of illumination from the light source 10 is occluded at the shading point 30. Once the shadow factor is computed for the shading point 30, the renderer may use the depth map 40 to compute shadow factors for additional shading points in the scene.

The method described above can be very computationally expensive, especially for large depth maps. Depending on the number of objects in the scene, there may be a large number of non-empty pixels in the depth map, each of which would be processed as described above. Taking into consideration that this method may be performed for each shading point and for each light source, and that there can be several shading points computed for each pixel of an image, the number of computations required to determine just the shadow factors for a single image can be very large. Accordingly, various methods can be applied to save time and computer resources. For example, the renderer may skip computing the shadow factor for a shading point and use interpolation to determine its shadow factor based on the shadow factors of its neighbors. Additionally, the renderer may undersample (e.g., taking every n^{th} pixel in the depth map), effectively decreasing the resolution of the depth map. The renderer may further optimize the method by eliminating pixels on the depth map that geometrically cannot project back onto the light source area. Such pixels would typically be pixels in the depth map that are peripheral to the shading point and have a relatively large z-depth. Therefore, based on the conditions of the scene to be rendered and graphics requirements, any of a number of techniques can be used in conjunction with the invention to produce realistic soft shadows in a computationally economical fashion.

While the processes described herein produce realistic soft shadows in many cases, in some instances it may result in certain artifacts or other undesirable effects. For example, the method may result in shadows that are too dark in some locations, and too light in others. This can be caused by projected pixels that overlap (causing dark areas), or by gaps between the projected pixels (causing light leaks). These problems may be caused, at least in part, by limitations inherent in depth maps. Because depth maps only contain information about the nearest object to the light source, they omit information about non-nearest objects, even though those objects may also affect the shadow cast at the shading point.

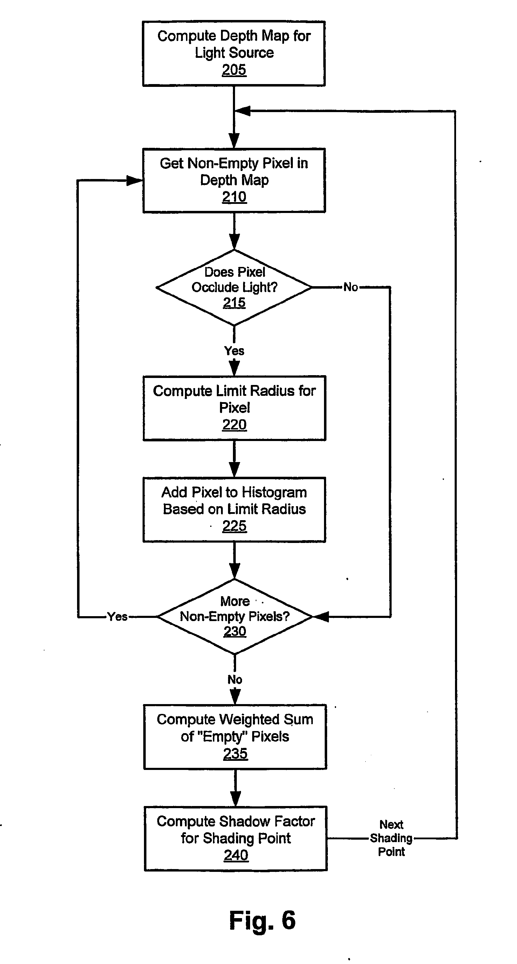

Fig. 6 shows a flow diagram of another embodiment for determining the area of a light source occluded at a shading point, this embodiment addressing some of the limitations described above. Whereas the embodiment shown in Fig. 3 determined an occluded portion of the light source 10 by summing the areas of the occluded projected pixels 45", the embodiment shown in Fig. 6 determines the occluded portion of the light source 10 by subtracting from the total area of the light source 10 an estimate of the non-occluded area. The non-occluded area is estimated using a heuristic technique that counts the empty pixels and determines an estimate for the non-occluded area based on a weighted sum of the empty pixels.

- A depth map 40 is first computed 205 for the light source 10, as described above in connection with Fig. 3. Fig. 6 illustrates a method for determining a shadow factor for a given shading point; however, as with the method described in connection with Fig. 3, this computed depth map 40 can be used for determining the shadow factor for some or all of the shading points necessary to produce the image. The depth map 40 need not be recomputed for each shading point 30.

The renderer retrieves 210 a non-empty pixel from the depth map 40 and determines 215 whether the pixel occludes the light source 10. This determination can be performed by projecting the pixel from the light source according to its depth value, and then back onto the light source from the shading point, as described in connection with steps 115, 120, and 125 in Fig. 3. If the pixel occludes the light source 10, the renderer computes 220 a limit radius for the pixel 45 based on the z-depth of the pixel 45. The limit radius is illustrated in Fig. 7. In this embodiment, the limit radius for a particular z-value is defined as the radius of a disc (as measured in pixels of the depth map projected to that z-value) that matches the light source disc seen from the shading point 30. In other words, the limit radius is a measure of how many pixels projected from the depth map to a particular depth would it take to cover the light source. The limit radius can be computed by projecting the light source area from the shading point onto the plane at the given depth (z-value), and further projecting this area onto the depth map.

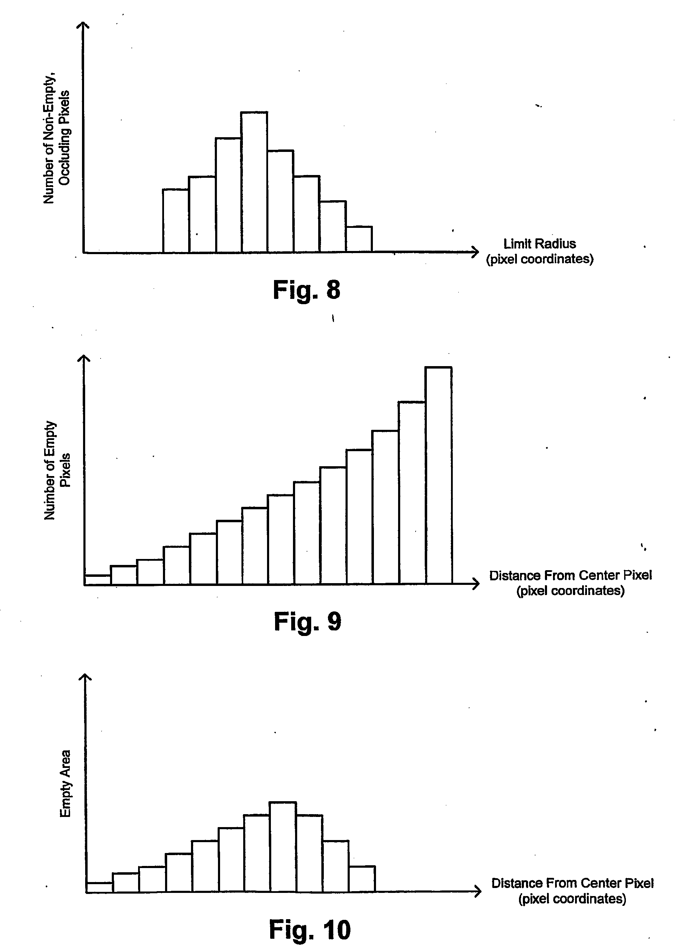

The non-empty, occluding pixels are added 225 to a histogram based on their computed limit radius. Fig. 8 shows an example histogram of non-empty, occluding pixels. Accordingly, the histogram provides a relative measurement of the size of the pixels that occlude the light source. The histogram can be constructed once the limit radii are computed for all of the pixels, or it can be constructed while looping through the non-empty pixels for optimization purposes.

As stated above, the empty pixels are used to estimate the non-occluded area of the light source 10. Since the empty pixels are those pixels for which there was no object nearer than the shading point in the direction according to their position in the depth map, they were not assigned any z-values when the depth map was created.

With reference to Fig. 7, a center pixel is defined as the pixel in the depth map that contains the shading point (e.g., the pixel intersected by a line between the light source 10 and the shading point 30. For each empty pixel in the depth map 40, a distance to this center pixel can be calculated. In addition to the histogram of non-empty, occluding pixels, the renderer maintains a histogram of the number of empty pixels based on their distance to the center pixel. An example of this histogram is shown in Fig. 9, which shows a histogram that contains for each distance from the center pixel the number of empty pixels at that distance. The histogram of empty pixels can be constructed at the same time as the non-empty occluding pixels histogram is constructed (i.e., while the renderer loops through steps 210 through 230), or it can be constructed afterwards.

Once the pixels have been processed as described above, the renderer computes 235 a weighted sum of the empty pixels in the histogram. The empty pixels are weighted according to (1) the distribution of the occluding pixels by their depth values, and (2) the distance of the empty pixel from a center pixel. In one embodiment, the renderer counts and rejects essentially the same number of empty pixels as the number of non-empty pixels counted and rejected as occluding. The renderer rejects the empty pixels for which the distance to the center pixel is outside the corresponding limit radius. The graph of Fig. 10 shows the empty pixels that are estimated to lie within the area of the light source. This graph corresponds to the data in the histograms of Figs. 8 and 9. The sum of the area of the empty pixels shown in Fig. 10 provides an estimate of the non-occluded area of the light source. Based on this estimate and the total area of the light source, the renderer computes 240 a shadow factor.

Shown below is example code for computing 240 the weighted sum of the empty pixels. If the value of the histogram of occluded area for a limit radius is denoted by covered-area[i] (e.g., Fig. 8), and the number of empty pixels for a distance i is denoted by empty_pixels[i] (e.g., Fig. 9), then the estimated non-occluded area can be computed according to:

```
        empty_area = 0;
        for each distance i :
               weight = 0
               for each radius j with 0 <= j < i:
                      weight = weight + covered_area[j]
               weight = weight + 0.5 * covered_area[i]
               empty_area = empty_area + weight * empty_pixels[i]
```

where the line "weight = weight + 0.5 * covered_area[i]" is a corrective interpolating term.

The embodiment described in connection with Fig. 6 can be thought of as a heuristic that estimates whether each empty pixel occludes the light source based on the pixel's distance from the center pixel and the limit radii of the distribution of non-empty, occluding pixels. Based on this estimation, those empty pixels that have been estimated to be inside the light source are included, and they are added to the non-occluded area total based on the constraint that the empty pixels have the same size distribution as the occluding pixels. With the resulting estimated non-occluded area, the shadow factor is readily computed, for example as a ratio of the occluded area to the total area of the light source.

The embodiment described in connection with Fig. 6 is based on the assumption that the light source is a disc oriented orthogonal to the main light viewing direction. This embodiment of the invention can also be implemented for different configurations of the light source process by modifying the process accordingly.

The methods and techniques described herein can be performed by a computer program product and/or on a computer-implemented system. For example, to perform the steps described, appropriate modules are designed to implement the method in software, hardware, firmware, or a combination thereof. The invention therefore encompasses a system, such as a computer system installed with appropriate software, that is adapted to perform these techniques for creating soft shadows. Similarly, the invention includes a computer program product comprising a computer-readable medium containing computer program code for performing these techniques for creating soft shadows, and specifically for determining an extent to which an area light source is occluded at a particular shading point in an image.

The foregoing description of the embodiments of the invention has been presented for the purposes of illustration and description. It is not intended to be exhaustive or to limit the invention to the precise forms disclosed. Persons skilled in the relevant art can appreciate that many modifications and variations are possible in light of the above teaching. It is therefore intended that the scope of the invention be limited not by this detailed description, but rather by the claims appended hereto.

## Claims

1. A computer-implemented method for computing a shadow factor for an area light source at a particular shading point, the method comprising:
computing a depth map that includes an array of pixels, wherein pixels in the depth map have a depth value that indicates a depth from the light source to a portion of an occluding object contained by the pixel, wherein a plurality of the pixels in the depth map contain no occluding objects and are defined to be empty;
for a number of pixels in the depth map, computing an estimated non-occluded area of the light source occluded by a portion of an object represented by the depth map pixel by:
identifying the non-empty pixels that occlude the light source at the shading point; estimating the non-occluded area of the light source using a weighted sum of the empty pixels, wherein empty pixels having the same distance from a center pixel are multiplied by a weight, the weight depending on the number of occluding pixels at an associated depth value; and computing a shadow factor based on the estimated non-occluded area and total area of the light source.

2. The computer-implemented method of claim 1, wherein the center pixel is intersected by a line between the light source and the shading point.

3. The computer-implemented method of claim 2, wherein the weight depending on the number of occluding pixels has a limit radius, defined as the radius of the light source projected to the particular depth in terms of depth map pixels also projected to that depth.

4. A computer program product for computing a shadow factor for an area light source at a particular shading point, the computer program product comprising a computer- readable medium containing computer program code that, when being executed by a computer, performs the method according to any one of claims 1 to 3.

## Patentansprüche

1. Computerimplementiertes Verfahren zum Berechnen eines Schattenfaktors für eine Flächenlichtquelle an einem bestimmten Schattenpunkt, wobei das Verfahren umfasst:
Berechnen einer Tiefenkarte, die eine Anordnung von Bildelementen enthält, wobei Bildelemente in der Tiefenkarte einen Tiefenwert aufweisen, der eine Tiefe von der Lichtquelle zu einem Teil eines verdeckenden Objekts, der in dem Bildelement enthalten ist, angibt, wobei eine Vielzahl der Bildelemente in der Tiefenkarte keine verdeckenden Objekte enthält und als leer definiert wird;
für eine Anzahl von Bildelementen in der Tiefenkarte Berechnen einer geschätzten unverdeckten Fläche der Lichtquelle, die von einem Teil eines Objektes verdeckt ist, das durch das Tiefenkartenbildelement dargestellt wird, durch:
Identifizieren der nicht leeren Bildelemente, die die Lichtquelle an dem Schattenpunkt verdecken; Schätzen der nicht verdeckten Fläche der Lichtquelle unter Verwendung einer gewichteten Summe der leeren Bildelemente, wobei leere Bildelemente mit demselben Abstand von einem zentralen Bildelement mit einer Gewichtung multipliziert werden, wobei die Gewichtung von der Anzahl von verdeckenden Bildelementen bei einem zugehörigen Tiefenwert abhängt; und Berechnen eines Schattenfaktors auf der Basis der geschätzten nicht verdeckten Fläche und der Gesamtfläche der Lichtquelle.

2. Computerimplementiertes Verfahren nach Anspruch 1, **dadurch gekennzeichnet, dass** das zentrale Bildelement von einer Linie zwischen der Lichtquelle und dem Schattenpunkt geschnitten wird.

3. Computerimplementiertes Verfahren nach Anspruch 2, **dadurch gekennzeichnet, dass** die Gewichtung, die von der Anzahl von verdeckenden Bildelementen abhängt, einen Grenzradius aufweist, der als der Radius der Lichtquelle, die auf die Tiefe projiziert ist, in Form von Tiefenkartenbildelementen, die auch auf die Tiefe projiziert sind, definiert ist.

4. Computerprogrammprodukt zum Berechnen eines Schattenfaktors für eine Flächenlichtquelle an einem bestimmten Schattenpunkt, wobei das Computerprogrammprodukt ein computerlesbares Medium umfasst, das Computerprogrammcode enthält, der bei Ausführung durch einen Computer das Verfahren nach einem der Ansprüche 1 bis 3 ausführt.

## Revendications

1. Procédé implémenté sur ordinateur permettant le calcul d'un facteur d'ombre pour une source de lumière surfacique au niveau d'un point d'ombrage particulier, le procédé comportant :
le calcul d'une carte de profondeur qui comprend une matrice de pixels, dans lequel les pixels dans la carte de profondeur ont une valeur de profondeur qui indique une profondeur depuis la source de lumière jusqu'à une partie d'un objet d'occlusion contenu par le pixel, dans lequel une pluralité des pixels dans la carte de profondeur ne contiennent pas d'objets d'occlusion et sont définis comme étant vides ;
pour un certain nombre de pixels dans la carte de profondeur, le calcul d'une surface non occluse estimée de la source de lumière occluse par une partie d'un objet représenté par le pixel de la carte de profondeur par :
l'identification des pixels non vides qui occluent la source de lumière au niveau du point d'ombrage ; l'estimation de la surface non occluse de la source de lumière en utilisant une somme pondérée des pixels vides, dans lequel les pixels vides ayant la même distance depuis un pixel central sont multipliés par un poids, le poids étant fonction du nombre de pixels d'occlusion à une valeur de profondeur associée ; et le calcul d'un facteur d'ombre basé sur la surface non occluse estimée et la surface totale de la source de lumière.

2. Procédé implémenté sur ordinateur selon la revendication 1, dans lequel le pixel central est croisé par un trait entre la source de lumière et le point d'ombrage.

3. Procédé implémenté sur ordinateur selon la revendication 2, dans lequel le poids qui est fonction du nombre de pixels d'occlusion a un rayon limite, défini comme étant le rayon de la source de lumière projetée sur la profondeur particulière en termes de pixels de la carte de profondeur également projetés sur cette profondeur.

4. Produit de programme informatique permettant le calcul d'un facteur d'ombre pour une source de lumière surfacique au niveau d'un point d'ombrage particulier, le produit de programme informatique comportant un support lisible par un ordinateur contenant un code de programme informatique qui, lors de son exécution par un ordinateur, met en oeuvre le procédé selon l'une quelconque des revendications 1 à 3.
